# EUROPEAN PATENT SPECIFICATION

(11) **EP 3 210 507 B1**
(45) Date of publication and mention of the grant of the patent: **06.03.2019**
(21) Application number: 16190724.1
(22) Date of filing: 27.09.2016
(51) Int. Cl.: A47J 37/06

(54) **AIR FRYER**
LUFTFRITEUSE
FRITEUSE A AIR CHAUD

(30) Priority: 26.02.2016 CN 201610104960
(43) Date of publication of application: 30.08.2017
(73) Proprietor: Ningbo Biyi Electric Appliance Co., Ltd, Yuyao Zhejiang 315400 (CN)
(72) Inventor: MAN, Kaimeng, Yuyao, Zhejiang 315400 (CN)
(74) Representative: ZHAOffice SPRL

(56) References cited:
- WO-A1-2012/032449
- WO-A1-2015/028940
- CN-A- 103 142 151
- CN-U- 202 858 890
- DE-U1-202014 103 133

## Description

### BACKGROUND OF THE INVENTION

The present invention related to an electric fryer, which is an air fryer.

The electrical fryer is a household appliance for frying various foods, such as meat, vegetable, fried dough twist and snacks, etc. With advantages as easy operation, rapid heating rate, the fryer is special equipment for snake bar, and a necessary kitchenware for modern life. While air fryer is a new household appliance for frying foods with application of high-speed air cycle technique. The air fryer is able to reduce 80% of oil and fat than that of food produced by traditional electric fryers. It is easy to clean, and is safe and economical, thus is favored by people. Such air fryer combine rapid cycle hot air and oven part uniquely, as disclosed in Chinese Patent Document-Application Number: 201310101037.9 published under CN 103142151 A, Application Announcement Date: 2013.06.12, Invention Name "A Smoke-free Air Fryer", the air fryer comprises fixed part and mobile part. The said air fryer has a top-moving power switch that is equipped at one lower side of the boss (for installing timer) at the front fixed part. The mobile part of the air fryer and food storage containers are locked, one upper side of the handle matched for unlocking is equipped with top-moving boss, and the top-moving boss is matched with top-moving power switch at one lower side of the boss of the fixed part. Flat spiral type electric heating tube is below the hot-air fan in the fixed part, whose power connector is connected with inner wall of the fixed part through connecting pieces. The tube body of the flat spiral type electric heating tube is elastically connected with inner wall of the fixed part through spring. The bottom center of the drip pan of the mobile part of the said air fryer is arc-shaped raised, with peripheral pot walls and the pot bottom to be arc-shaped. However, safety and cold-hot wind circulation structure, etc of the said air fryer are still need to be further improved.

### SUMMARY OF THE INVENTION

To over the said deficiencies, the invention is aimed to provide an air fryer, and solve problems among existing similar products such as weak structure design, safety and oil filter structure, etc. The goal is achieved by following technical solutions.

An air fryer, comprising a lower casing, an upper casing, a blade motor, a temperature switch, a cold-air blade, a hot-air blade, a spiral electric heating tube, a handle, an inner pot, a base, an outer pot, and a pot housing; the said pot housing, inner pot, outer pot and handle are integrated into a pot body, while the upper casing, the lower casing and the base are integrated into an engine body. The base is equipped with a bottom cover. The side of the base symmetrical with the handle is equipped with a wiring sleeve, and the pot body is placed in the opening of one lower side of the engine body. The pot housing is arc-shaped; the pot housing and the engine body form a complete conical body which is small at the top and big at the bottom. The handle is protruding out of the engine body. The upper part of the engine body is equipped with a spiral electric heating pipe and a blade motor whose spindle is connected with a cold-air blade and a hot-air blade to blow hot air inside the engine body into the inner spot by rotating the cold-air blade and the hot-air blade, and then be discharged. The cold air goes into the engine body, one part of the cold air be discharged, and the rest be heated to hot air; the key structure design is that a skirt of the outer pot beside on both sides of the handle is equipped with flat key holes symmetrically, and flat key holes are corresponding to through holes inside the upper casing. The through holes are located between inner diameter of an interlayer cover and the external diameter of a heat shield cover. At two sides of upper casing above the through holes are symmetrical upper air-holes, and the base at two sides of wiring sleeves is equipped with lower air-holes. The gap between inner diameter of the heat shield cover and external diameter of a heating tube cover, and the heating tube is opposed to the pot mouth. The said gap between the heat shield cover and the heating tube cover is connected with external diameter of the engine body through an air outlet plate which is located at one side of the engine body symmetrical to the handle; the cold-air blade and hot-air blade inside the upper casing is separated by the heat shield cover, and the hot-air blade inside the upper casing is opposed to the air inlet hole of the heating tube cover. The air inlet hole of the heating tube cover is equipped with hot-air mesh, and a spiral heating tube is equipped inside the heating tube cover. The controller and blade motor are equipped inside the cavity between outer diameter of interlayer cover and inner diameter of the upper casing. The upper casing top and the upper cover are inclined to the handle. The upper cover at the top of upper casing is equipped with the temperature switch, which partly protrudes out of an arc-shaped groove at the top of upper casing. The upper casing at the handle side is equipped with a time switch that is located at the engine body above the handle. The spiral electrical heating tube, the temperature switch, the time switch and the blade motor are connected with controller through a line. The said structure has realized the hot-air and cold-air circulation with closing matching components, and is in accordant with requirements for heating and stability. In the same time, the air fryer is easy to assemble, to produce and to clean, with good heating and heat dissipation effect, and beautiful appearance.

The center of inner bottom of the said outer spot is raised, and the inner bottom of inner pot is equipped with oil-filter screen that is fixed by the clips inside the hole of inner pot. The hole of the inner pot is equipped with a small protruding edge whose diameter is smaller than the diameter of the oil filter screen. The said structure is easy for hot-air to enter into the inner pot after it entering into the outer pot and inner pot, and to have efficient and sufficient heating for foods on the oil filter screen; in the same time, the structure is easy for dismounting and cleaning the oil filter screen.

The said outer pot is connected with pot housing through a screw, and one side of the inner pot inside the outer pot is connected with the handle through connecting pieces. The handle and the pot housing are connected through a locking plate. The locking plate is L-shaped, with one end sticking into the pot housing and fitting with a metal sheet on the inner wall of the pot housing, and the other end against a locking sheet through a tilted cover. The locking sheet at the handle side is tilted. The shaft end of the tilted cover insert into the plate hole of the locking plate, and the pivot at the curved point of the locking plate is fixed in the handle. When the locking sheet is pressed, the locking plate will be driven by the tilted cover to rotate, and the locking part of the locking plate will be separated from the metal sheet. The said structure is easy to dismount the inner pot and outer pot, and to achieve good safety.

The bottom of the pot housing is equipped with a housing hook, and the base corresponding to the hook is equipped with a hook hole corresponding to the housing hook; when the pot body is placed into the engine body, the housing hook fits with the hook hole of the base. The said structure is able to prevent the pot body from being taken out arbitrarily and to improve the safety of the air fryer during the working.

The handle at a projecting edge of the said housing is equipped with a raised limiting diagonal bar, the upper casing corresponding to the limiting diagonal bar of the handle is equipped with a column plate, and a limiting column inside the upper casing is pushed out of column plate by a spring, and touches the beveled side of the limiting diagonal bar. The said structure is able to prevent ensure that the pot body not be taken out arbitrarily, which has further improved the safety of the air fryer during the working. In the same time, with matched housing hook at the bottom, the pot body can only been taken out by drawing out after driving the pot body tilted downward and outward through the handle.

The said cold-air blade and hot-air blade are plane blades with tilted back blades respectively. The back blade for cold-air blade is tilted upward; while back lade for hot-air blade is tilted downward. Meanwhile, the back blades are equipped with corresponding guiding punching grooves. The said structure has further improved the hot air and cold air circulation effect, and has reduced the space occupancy of blades.

The said upper casing between the time switch and the handle is equipped with an indicator light, and the base at two sides of the handle is equipped with a corner groove respectively. The said structure is easy for indicating the working state of the air fryer, and for moving the air fryer.

The invention has reasonable designed structure, and is easy to produce, operate and clean, with good stability, safety and beautiful appearance; mainly used as air fryer, and for structure improvement of similar products.

### BRIEF DESCRIPTION OF THE DRAWINGS

**FIG. 1** is cross-sectional view I of the invention; wherein, A part is framed, and arrows indicate the direction of hot air.
**FIG. 2** is cross-sectional view II of the invention, wherein, arrows indicate the direction of cold air.
**FIG. 3** is enlarged view of A part of FIG.1.
**FIG. 4** is three-dimensional structure view of the invention.
**FIG. 5** is structural view of the invention when pot boy been taken out.
**FIG. 6** is structural view I of the invention when pots been separated
**FIG. 7** is structural view II of the invention when pots been separated
**FIG. 8** is inner structural view of engine part of the invention.
Number and Name: 1. Lower Casing 2.Air Outlet Plate 3.Upper Casing 4.Upper Cover 5.Blade Motor 6.Temperature Switch 7.Cold-air Blade 8.Time Switch 9.Interlayer Cover 10.Hot-air Blade 11.Heat Shield Cover 12.Heating Tube Cover 13.Hot-air Mash 14.Spiral Electrical Heating Tube 15.Connecting Pieces 16.Locking Sheet 17.Tilted Cover 18.Locking Plate 19.Handle 1901.Limiting Diagonal Bar 20.Inner Pot 21.Oil Filter Screen 22.Base 23.Bottom Cover 24.Wiring Sleeve 25.Outer Pot 26.Pot Housing 2601.Housing Hook 27.Limiting Column 28.Column Plate

### DESCRIPTION OF THE PREFERRED EMBODIMENT

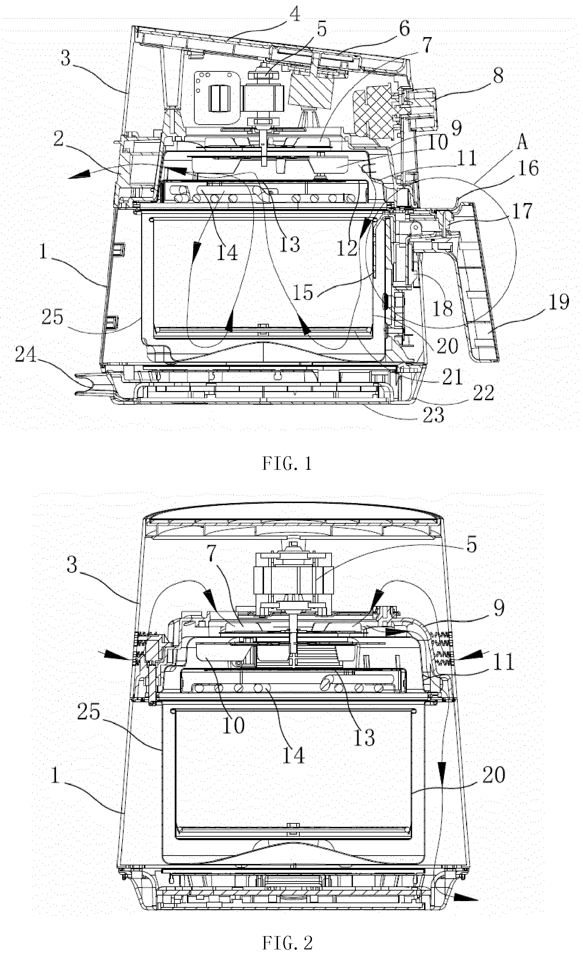

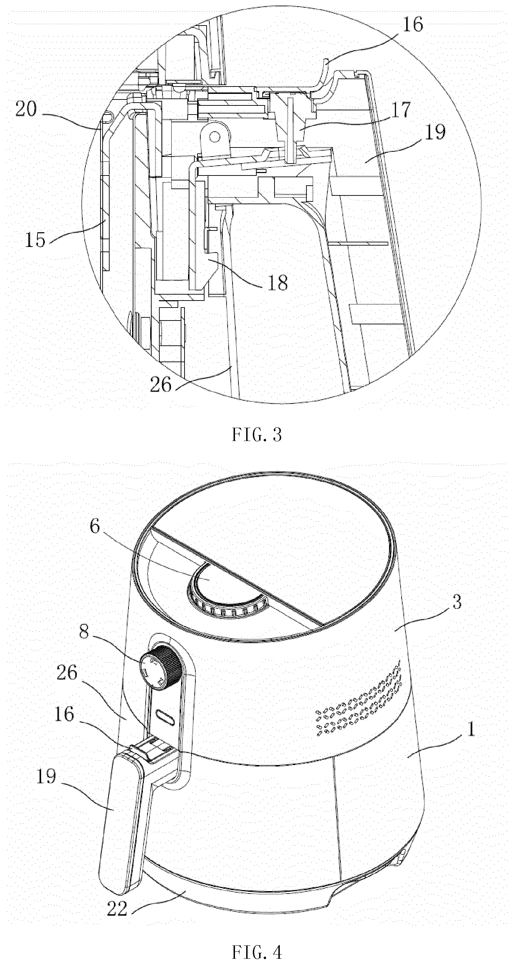

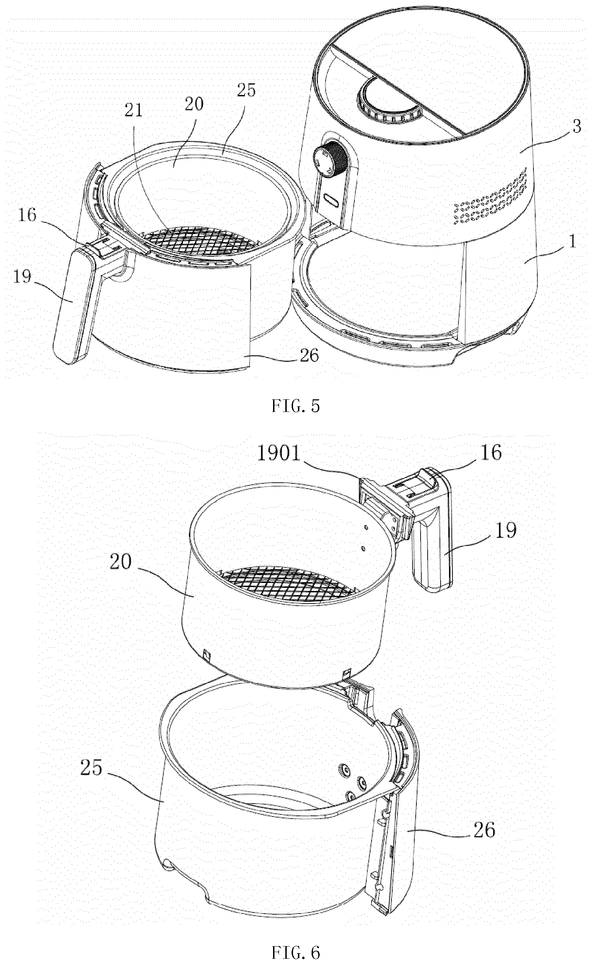

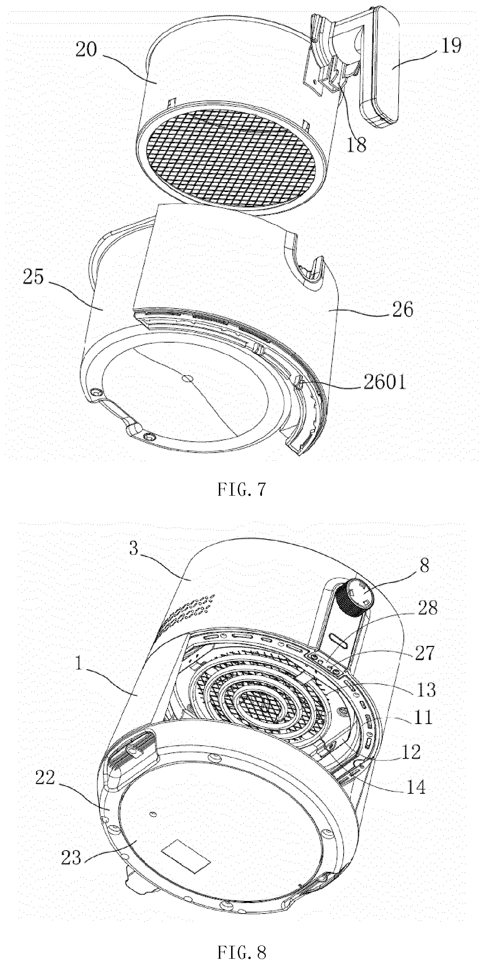

Turning to the drawings, and further description of structure and usage of the invention is provided. As shown in FIG1-8, the pot body of the air fryer is integrated by a pot housing **26,** an outer pot **25,** an inner pot **20** and a handle **19,** specific as: the outer pot is connected with the pot housing through a screw, and one side of the inner pot inside the outer pot is connected with the handle through connecting pieces **15.** The handle and the pot housing are connected through a locking plate **18.** The locking plate is L-shaped, with one end sticking into the pot housing and fitting with a metal sheet on the inner wall of the pot housing, and the other end against a locking sheet **16** through a tilted cover **17.** The locking sheet at the handle side is tilted. The shaft end of the tilted cover inserts into the plate hole of the locking plate, and the pivot at the curved point of the locking plate is fixed in the handle. When pressing the locking sheet, the locking plate will be driven by the tilted cover to rotate, and the locking part of the locking plate will be separated from the metal sheet. In the same time, the center of inner diameter bottom of the outer spot is raised, and the inner diameter bottom of inner pot is equipped with an oil-filter screen **21** that is fixed by clips inside the hole of inner pot. The hole of the inner pot is equipped with a small protruding edge whose diameter is smaller than the diameter of the oil filter screen. The bottom of the pot housing is equipped with a housing hook **2601,** and the base **22** corresponding to the hook is equipped with a hook hole; when placing the pot body into the engine body, the housing hook will fit with the hook hole of the base. The handle at the protruding edge of the said housing is equipped with a raised limiting diagonal bar **1901,** the upper casing **3** corresponding to the limiting diagonal bar of the handle is equipped with a column plate **28,** and a limiting column **27** inside the upper casing is pushed out of the column plate through a spring, and touches the beveled side of the limiting diagonal bar.

The upper casing **1,** lower casing **3** and base **22** are integrated into the engine body. The base is equipped with a bottom cover **23.** The side of the base symmetrical with the handle is equipped with a wiring sleeve **24,** and the pot body is placed in the opening of one lower side of the engine body. The pot housing **26** is arc-shaped; the pot housing and the engine body form a complete conical body which is small at the top and big at the bottom. The handle protrudes out of the engine body. The upper part of the engine body is equipped with a spiral electric heating pipe **14** and a blade motor **5** whose spindle is connected with a cold-air blade **7** and a hot-air blade **10** to blow hot air inside the engine body into the inner spot by rotating the cold-air blade and the hot-air blade, and then be discharged. The cold air goes into the engine body, one part of the cold air is discharged, and the rest is heated to hot air. The specific structures are as follows: A skirt of the outer pot **25** at both sides of the handle **19** is equipped with flat key holes symmetrically, and flat key holes are corresponding to through holes inside the upper casing. The through holes are located between inner diameter of an interlayer cover **9** and the external diameter of a heat shield cover 11. At two sides of upper casing above the through holes are symmetrical upper air-holes, and the base **22** at two sides of wiring sleeves are equipped with lower air-holes. The gap between inner diameter of the heat shield cover and external diameter of the heating tube cover **12,** and the heating tube is opposed to the pot mouth. The said gap between heat shield cover and heating tube cover is connected with external diameter of engine body through an air outlet plate **2** which is located at one side of the engine body symmetrical to the handle.

In the same time, the cold-air blade and hot-air blade inside the upper casing is separated by the heat shield cover. The said cold-air blade and hot-air blade are plane blades with tilted back blades respectively. The back blade for cold-air blade is tilted upward; while back blade for hot-air blade is tilted downward. Meanwhile, the back blades are equipped with corresponding guiding punching grooves. The hot-air blade inside the upper casing is opposed to the air inlet hole of the heating tube cover. The air inlet hole of the heating tube pipe is equipped with hot-air mesh **13,** the spiral heating tube is equipped inside the heating tube cover. The controller and blade motor are equipped inside the cavity between outer diameter of interlayer cover and inner diameter of upper casing. The upper casing top and the upper cover **4** are inclined to the handle. The upper cover at the top of upper casing is equipped with a temperature switch **6,** which partly protrudes out of the arc-shaped groove at the top of upper casing. The upper casing at the handle side is equipped with a time switch **8** that is located at the engine body above the handle. The spiral electrical heating tube, the temperature switch, the time switch and the blade motor are connected with a controller through a line. The upper casing between the time switch and the handle is equipped with an indicator light, and the base at two sides of the handle is equipped with corner groove respectively. The limiting column is equipped inside the independent cavity of the upper engine body.

When using the fryer, firstly, place the oil filter screen **21** into the inner pot **20,** and fix it at the clip; then pour the oil into the inner pot, and place the inner pot into the outer pot **25.** Insert the locking plate **18** of the handle into the pot housing **26** of the outer pot. Fit the locking plate with the metal sheet on the inner wall of the pot housing. The pot housing, outer pot, inner pot and handle are integrated. Place the food on the oil filter screen of the inner spot, and place the said integrated pot body into the port at one lower side of the engine body through handle. Fit the housing hook of the pot housing with hook hole of the base. Complete the installation with a click sound. Finally, adjust the temperature at temperature switch, and time at time switch. After the food processing, tilt the body pot downward and outward through the handle, and extract the pot; and the pot body is able to be taken out when the housing hook of the pot housing is separated from the hook hole of the base, and the limiting diagonal bar of the handle is separated from the limiting column.

## Claims

1. An air fryer, comprising a lower casing **(1),** an upper casing **(3),** a blade motor **(5),** a temperature switch **(6),** a cold-air blade **(7),** a hot-air blade **(10),** a spiral electric heating tube **(14),** a handle **(19),** an inner pot **(20),** a base **(22),** a bottom cover **(23), an** outer pot **(25)** and a pot housing **(26);** the said pot housing, inner pot, outer pot and handle are integrated into a pot body, while the upper casing **(3),** the lower casing **(1)** and the base **(22)** are integrated into an engine body, the base is equipped with a bottom cover, the side of the base symmetrical with the handle is equipped with a wiring sleeve **(24),** and the pot body is placed in the opening of one lower side of the engine body, the pot housing is arc-shaped; the pot housing and the engine body form a complete conical body which is small at the top and big at the bottom, the handle protruding out of the engine body, the upper part of the engine body being equipped with a spiral electric heating pipe and a blade motor whose spindle is connected with a cold-air blade and an hot-air blade to blow hot air inside the engine body into the inner pot (20) by rotating the cold-air blade and the hot-air blade, and then discharge, the cold air goes into the engine body, one part of the cold air is discharged, and the rest is heated to hot air, a controller and the blade motor (5) are equipped inside the cavity between the outer diameter of the interlayer cover and the inner diameter of the upper casing, **characterized in that** a skirt of the outer pot **(25)** on both sides of the handle **(19)** is provided with flat key holes symmetrically, and the flat key holes are corresponding to through holes inside the upper casing (3), the through holes being located between the inner diameter of an interlayer cover **(9)** and the external diameter of a heat shield cover **(11),** at two sides of the upper casing above the through holes are symmetrical upper air-holes, and the base **(22)** at two sides of the wiring sleeve **(24)** is equipped with lower air-holes, the gap between the inner diameter of the heat shield cover **(11)** and the external diameter of a heating tube cover **(12)** is opposed to the pot mouth, said gap between the heat shield cover **(11)** and the heating tube cover **(12)** is connected with the external diameter of the engine body through an air outlet plate **(2)** which is located at one side of the engine body symmetrical to the handle; the cold-air blade **(7)** and hot-air blade **(10)** inside the upper casing are separated by the heat shield cover **(11),** and the hot-air blade inside the upper casing is opposed to the air inlet hole of the heating tube cover **(12),** the air inlet hole of the heating tube cover **(12)** is equipped with a hot-air mesh **(13),** and a spiral heating tube **(14)** is equipped inside the heating tube cover (**12**), the upper casing top and the upper cover **(4)** are inclined to the handle, the upper cover at the top of the upper casing is equipped with the temperature switch **(6),** which partly protrudes out of an arc-shaped groove at the top of the upper casing, the upper casing at the handle side is equipped with a time switch **(8)** that is located at the engine body above the handle, the spiral electrical heating tube, the temperature switch, the time switch and the blade motor being connected with a controller through a line.

2. The said air fryer according to claim 1, **characterized in that** the center of inner bottom of the outer pot **(25)** is raised, and the inner bottom of inner pot **(20)** is equipped with an oil-filter screen **(21)** that is fixed by the clips inside the hole of the inner pot, the hole of the inner pot is equipped with a small projecting edge whose diameter is smaller than the diameter of the oil filter screen.

3. The said air fryer according to claim 1, **characterized in that** the said outer pot **(25)** is connected with the pot housing **(26)** through a screw, and one side of the inner pot **(20)** inside the outer pot is connected with the handle **(19)** through connecting pieces **(15),** the handle and the pot housing are connected through a locking plate **(18),** the locking plate being L-shaped, with one end sticking into the pot housing and fitting with a metal sheet on the inner wall of the pot housing, and the other end against a locking sheet **(16)** through a tilted cover **(17),** the locking sheet at the handle side being tilted, the shaft end of the tilted cover inserts into the plate hole of the locking plate, and the pivot at the curved point of the locking plate is fixed in the handle, wherein when the locking sheet is pressed, the locking plate will be driven by the tilted cover to rotate, and the locking part of the locking plate will be separated from the metal sheet.

4. The said air fryer according to claim 1, **characterized in that** the bottom of the pot housing **(26)** is equipped with a housing hook **(2601),** and the base **(22)** is equipped with a hook hole corresponding to the housing hook; wherein when the pot body is placed into the engine body, the housing hook fits with the hook hole of the base.

5. The said air fryer according to claim 1, **characterized in that** the handle **(19)** at a projecting edge of the said housing **(26)** is equipped with a raised limiting diagonal bar **(1901),** the upper casing **(3)** corresponding to the limiting diagonal bar of the handle is equipped with a column plate **(28),** and a limiting column **(27)** inside the upper casing is pushed out of the column plate (28) by a spring, and touches a beveled side of the limiting diagonal bar (1901).

6. The said air fryer according to claim 1, **characterized in that** the said cold-air blade **(7)** and hot-air blade **(10)** are plane blades with tilted back blades respectively, the back blade for cold-air blade is tilted upward; while back blade for hot-air blade is tilted downward, meanwhile, the back blades are equipped with corresponding guiding punching grooves.

7. The said air fryer according to claim 1, **characterized in that** upper casing **(3)** between the time switch **(8)** and the handle **(19)** is equipped with an indicator light, and the base **(22)** at two sides of the handle is equipped with a corner groove respectively.

## Patentansprüche

1. Luftfriteuse, die ein unteres Gehäuse (1), ein oberes Gehäuse (3), ein Flügelmotor (5), einen Temperaturschalter (6), einen Kaltluftflügel (7), einen Heißluftflügel (10), ein elektrisches Spiralheizrohr (14), einen Griff (19), einen Innentopf (20), eine Basis (22), einen Bodendeckel (23), einen Außentopf (25) und ein Topfgehäuse (26) umfasst; wobei diese Topfgehäuse, Innentopf, Außentopf und Griff in einem Topfkörper integriert sind, während das obere Gehäuse (3), das untere Gehäuse (1) und die Basis (22) in einem Apparatkörper integriert sind, die Basis mit einem Bodendeckel ausgerüstet ist, die gegenüber dem Griff symmetrische Seite der Basis mit einer Kabelhülse (24) ausgestattet ist, und das Topfkörper in die Öffnung einer tieferen Seite des Apparatkörpers gestellt ist, das Topfgehäuse bogenförmig ist; das Topfgehäuse und der Apparatkörper einen kompletten konischen Körper bilden, der am Oberteil klein und am Boden groß ist, wobei der Griff aus dem Apparat absteht, das obere Teil des Apparatkörpers mit einem elektrischen Spiralheizrohr und mit einem Flügelmotor ausgerüstet ist, dessen Welle mit einem Kaltluftflügel und einem Heißluftflügel zum Blasen von Heißluft innerhalb des Apparatkörpers zum Innentopf, indem der Kaltluftflügel und der Heißluftflügel gedreht werden, und zum Auslassen verbunden ist, wobei die Kaltluft in den Apparatkörper eingeleitet wird, ein Teil der Kaltluft ausgelassen wird und der Rest zur Heißluft aufgeheizt wird, eine Steuervorrichtung und der Flügelmotor (5) innerhalb dem Hohlraum zwischen dem Außendurchmesser des Zwischenschichtdeckels und dem Innendurchmesser des oberen Gehäuses angeordnet sind,
**dadurch gekennzeichnet, dass** ein Unterteil des Außentopfes (25) an den beiden Seiten des Griffs (19) symmetrisch mit flachen Passfederlöchern versehen ist, und die flachen Passfederlöcher Durchgangslöchern innerhalb des oberen Gehäuse (3) entsprechen, wobei die Durchgangslöcher zwischen dem Innendurchmesser eines Zwischenschichtdeckels (9) und dem Außendurchmesser eines Hitzeschilddeckels (11) liegen, dass an den beiden Seiten des oberen Gehäuses über den Durchgangslöchern symmetrische Luftlöcher vorliegen, und die Basis (22) an den beiden Seiten der Kabelhülse mit tieferen Luftlöchern ausgestattet ist, die Spalte zwischen dem Innendurchmesser des Hitzeschilddeckels (11) und dem Außendurchmesser eines Heizrohrdeckels (12) gegenüber der Topfmündung liegt, diese Spalte zwischen dem Hitzeschilddeckel (11) und dem Heizrohrdeckel (12) mit dem Außendurchmesser des Apparatkörpers über eine Luftauslassplatte (2) verbunden ist, die sich an einer Seite des Apparatkörpers symmetrisch gegenüber dem Griff befindet; der Kaltluftflügel (7) und der Heißluftflügel (8) innerhalb des oberen Gehäuses von dem Hitzeschilddeckel (11) getrennt sind, und der Heißluftflügel innerhalb des oberen Gehäuses sich gegenüber dem Lufteinlassloch des Heizrohrdeckel (12) befindet, das Lufteinlassloch des Heizrohrdeckels (12) mit einem Heißluftnetz (13) ausgestattet ist, und ein Spiralheizrohr (14) innerhalb des Heizrohrdeckels (12) vorgesehen ist, das Oberteil des oberen Gehäuses und der Oberdeckel (4) zum Griff geneigt sind, der Oberdeckel am Oberteil des oberen Gehäuses mit dem Temperaturschalter (6) ausgestattet ist, der teilweise aus einer bogenförmigen Nut am Oberteil des oberen Gehäuse herausragt, das obere Gehäuse an der Griffseite mit einem Zeitschalter (8) ausgerüstet ist, der sich am Apparatkörper über dem Griff befindet, wobei das elektrische Spiralheizrohr, der Temperaturschalter, der Zeitschalter und das Flügelmotor mit einem Steuervorrichtung über eine Leitung verbunden sind.

2. Luftfriteuse nach Anspruch 1, **dadurch gekennzeichnet, dass** die Mitte des Innenbodens des Außentopfes (25) erhoben ist, und der Innenboden des Innentopfes (20) mit einem Ölfiltersieb (21) ausgestattet ist, das mittels den Klammern innerhalb der Öffnung des Innentopfes befestigt ist, dass die Öffnung des Innentopfes mit einem kleinen vorspringenden Rand, dessen Durchmesser kleiner als der Durchmesser des Ölfiltersiebes ist.

3. Luftfriteuse nach Anspruch 1, **dadurch gekennzeichnet, dass** dieser Außentopf (25) mit dem Topfgehäuse (26) über eine Schraube verbunden ist, und eine Seite des Innentopfes (20) innerhalb des Außentopfes mit dem Griff (19) über Verbindungsteile (15) verbunden ist, der Griff (19) und das Topfgehäuse über eine Verriegelungsplatte (18) verbunden sind, wobei die Verriegelungsplatte L-förmig ist und ein in das Topfgehäuse einsteckendes und an ein Metallblech auf dem Innenwand des Innentopfes angepasstes Ende und ein anderes Ende gegen ein Verriegelungsblech (16) durch einen geneigten Deckel (17) aufweist, wobei das Verriegelungsblech an der Griffseite geneigt ist, dass das Wellenende des geneigten Deckels in das Plattenloch der Verriegelungsplatte eingefügt ist, und, dass der Drehpunkt am gebogenen Punkt der Verriegelungsplatte im Griff befestigt ist, wobei, wenn das Verriegelungsblech gedrückt wird, die Verriegelungsplatte vom geneigten Deckel zum Drehen getrieben werden wird, und das Verriegelungsteil der Verriegelungsplatte vom Metallblech getrennt werden wird.

4. Luftfriteuse nach Anspruch 1, **dadurch gekennzeichnet, dass** der Boden des Topfgehäuses (26) mit einem Gehäusehaken (2601) ausgestattet ist, und die Basis (22) mit einem dem Gehäusehaken entsprechenden Hakenloch ausgestattet ist; wobei, wenn der Topfkörper in den Apparatkörper gelegt ist, der Gehäusehaken an das Hakenloch angepasst ist.

5. Luftfriteuse nach Anspruch 1, **dadurch gekennzeichnet, dass** der Griff (19) an einem vorspringenden Rand dieses Gehäuses (26) mit einem erhobenen diagonalen Begrenzungsstange (1901) ausgerüstet ist, dass das obere Gehäuse (3), das der diagonalen Begrenzungsstange entspricht, mit einem Säulenplatte (28) ausgerüstet ist, und, dass eine Begrenzungssäule (27) innerhalb des oberen Gehäuses von einem Feder aus der Säulenplatte hinausausgestoßt wird, und eine abgeschrägte Seite der diagonalen Begrenzungsstange (1901) berührt.

6. Luftfriteuse nach Anspruch 1, **dadurch gekennzeichnet, dass** diese Kaltluftflügel (7) und Heißluftflügel (10) flache Flügel mit jeweiligen geneigten rückwärtigen Flügeln sind, dass der rückwärtige Flügel für den Kaltluftflügel nach oben geneigt ist, während der rückwärtige Flügel für den Heißluftflügel nach unten geneigt ist, dass die rückwärtigen Flügel mit entsprechenden gestanzten Führungsnuten ausgestattet sind.

7. Luftfriteuse nach Anspruch 1, **dadurch gekennzeichnet, dass** das obere Gehäuse (3) zwischen dem Zeitschalter (8) und dem Griff (19) mit einer Leuchtanzeige ausgerüstet ist, und die Basis (22) an zwei Seiten des Griffs mit einer jeweiligen Eckennut versehen ist.

## Revendications

1. Friteuse à air chaud, comprenant un boîtier inférieur (1), un boîtier supérieur (3), un moteur à pales (5), un commutateur de température (6), une pale à air froid (7), une pale à air chaud (10), un tube de chauffage électrique spiralé (14), une poignée (19), un pot intérieur (20), une base (22), un couvercle de fond (23), un pot extérieur (25) et un logement de pot (26); friteuse dans laquelle lesdits logement de pot, pot intérieur, pot extérieur et poignée sont intégrés dans un corps de pot, tandis que le boîtier supérieur (3), le boîtier inférieur (1) et la base (22) sont intégrés dans un corps d'engin, la base est équipée d'un couvercle de fond, le côté de la base symétrique par rapport à la poignée est équipée d'une bague pour fil électrique (24), et le corps de pot est placé dans l'ouverture d'un côté inférieur du corps d'engin, le pot de logement est en forme d'arc; le logement de pot corps d'engin forment un corps conique complet qui est étroit au sommet et large à la base; la poignée étant saillante par rapport au corps d'engin, la partie supérieure du corps d'engin étant équipée d'un tube de chauffage électrique spiralé et d'un moteur à pales dont l'axe est raccordé à une pale à air froid et à une pale à air chaud à l'intérieur afin de souffler de l'air chaud à l'intérieur du corps d'engin dans le pot intérieur (20) par rotation de la pale à air froid et de la pale à air chaud et ensuite par refoulement, où l'air froid pénètre dans le corps d'engin, une partie de l'air froid est refoulée et le reste est chauffée de façon à produire de l'air chaud, un dispositif de commande et le moteur à pales (5) sont installés à l'intérieur de la cavité entre le diamètre extérieur du couvercle formant couche intermédiaire et le diamètre intérieur du boîtier supérieur, friteuse **caractérisée en ce qu'**une jupe du pot extérieur (25) sur les deux côtés de la poignée (19) est munie de façon symétrique de trous à clavette plats, et **en ce que** les trous à clavette plats correspondent à des trous de passage à l'intérieur du boîtier supérieur (3), les trous de passage étant situés entre diamètre intérieur d'un couvercle formant couche intermédiaire (9) et le diamètre extérieur d'un couvercle formant bouclier thermique (11), **en ce qu'** aux deux côtés du boîtier supérieur au-dessus des trous de passage il y a des trous d'air supérieurs symétriques, et **en ce que** la base (22) aux deux côtés de la bague à fil électrique (24) est équipée de trous d'air inférieurs, **en ce que** l'interstice entre le diamètre intérieur du couvercle formant bouclier thermique (11) et le diamètre extérieur du couvercle formant tube de chauffage (12) est opposé à l'embouchure du pot, ledit interstice entre le couvercle formant bouclier thermique (11) et le couvercle formant tube de chauffage (12) est raccordé au diamètre extérieur du corps d'engin par l'intermédiaire d'une plaque de sortie d'air (2) qui est située sur un côté du corps d'engin symétrique par rapport à la poignée; la pale à air froid (7) et la pale à air chaud (10) à l'intérieur du boîtier supérieur sont séparées par le couvercle formant bouclier thermique (11), et la pale à air chaud à l'intérieur du boîtier supérieur est opposée au trou d'entrée d'air du couvercle formant tube de chauffage (12), le trou d'entrée d'air du couvercle formant tube de chauffage (12) est équipé d'un maillage à air chaud (13), et un tube de chauffage spiralé (14) est installé à l'intérieur du couvercle formant tube de chauffage (12), le sommet du boîtier supérieur et le couvercle supérieur (4) sont inclinés vers la poignée, le couvercle supérieur au sommet du boîtier supérieur est équipé d'un commutateur de température (6), qui saille en partie d'une rainure en forme d'arc au sommet du boîtier supérieur, le boîtier supérieur du côté de la poignée est équipé d'une minuterie (8) qui est située sur le corps d'engin au-dessus de la poignée, le tube de chauffage électrique spiralé, le commutateur de température, la minuterie et le moteur à pales étant connectés à un dispositif de commande par l'intermédiaire d'une ligne.

2. Friteuse à air chaud selon la revendication 1, **caractérisée en ce que** le centre du fond intérieur du pot extérieur (25) est relevé, et le fond intérieur du pot intérieur (20) est équipé d'un tamis formant filtre à huile (21) qui est fixé par des attaches à l'intérieur de la cavité du pot intérieur, la cavité du pot intérieur est équipée d'un petit bord saillant dont le diamètre est plus petit que le diamètre du tamis formant filtre à huile.

3. Friteuse à air chaud selon la revendication 1, **caractérisée en ce que** ledit pot extérieur (25) est raccordé au logement de pot (26) par l'intermédiaire d'une vis, et un côté du pot intérieur (20) à l'intérieur du pot extérieur est raccordé à la poignée (19) par l'intermédiaire de pièces de raccordement (15), la poignée et le logement de pot sont raccordés par l'intermédiaire d'une plaque de verrouillage (18), la plaque de verrouillage étant en forme de L avec une extrémité s'enfonçant dans le logement de pot et s'adaptant au moyen d'une tôle métallique sur la paroi interne du logement de pot, et avec l'autre extrémité contre une tôle de verrouillage (16) par l'intermédiaire d'un couvercle incliné (17), la tôle de verrouillage du côté de la poignée étant inclinée, l'extrémité d'arbre du couvercle incliné s'insère dans le trou de plaque de la plaque de verrouillage, et le pivot au point courbe de la plaque de verrouillage est fixé dans la poignée, où, lorsqu'on appuie sur la tôlede verrouillage, la plaque de verrouillage sera entraînée par le couvercle incliné de façon à tourner, et la partie de verrouillage de la plaque de verrouillage sera séparée de la tôle métallique.

4. Friteuse à air chaud selon la revendication 1, **caractérisée en ce que** le fond du logement de pot (26) est équipé d'un crochet de logement (2601), et la base (22) est équipée d'un trou de crochet correspondant au crochet de logement; où, lorsque le corps de pot est placé dans le corps d'engin, le crochet de logement s'adapte au trou de crochet de la base.

5. Friteuse à air chaud selon la revendication 1, **caractérisée en ce que** la poignée (19) à un bord saillant dudit logement (26) est équipée d'une barre de limitation diagonale relevée, le boîtier supérieur (3) correspondant à la barre diagonale de limitation de la poignée est équipé d'une plaque de colonne (28), une colonne de limitation (27) à l'intérieur du boitier supérieur est poussée en dehors de la plaque de colonne par un ressort, et touche un côté chanfreiné de la barre diagonale de limitation (1901).

6. Friteuse à air chaud selon la revendication 1, **caractérisée en ce que** la pale à air froid (7) et la pale à air chaud (10) sont des pales planes avec respectivement des pales arrières inclinées, la pale arrière pour la pale à air froid est inclinée vers le haut; alors que la pale arrière pour la pale à air chaud est inclinée vers le bas, simultanément les pales arrières sont équipées de rainures estampées de guidage correspondantes.

7. Friteuse à air chaud selon la revendication 1, **caractérisée en ce que** le boitier supérieur (3) entre le commutateur de température (8) et la poignée (19) est équipé d'une lampe témoin, et la base (22) aux deux côtés de la poignée est équipée respectivement d'une rainure en forme de coin.
